# EUROPEAN PATENT APPLICATION

(11) **EP 4 803 369 A1**
(43) Date of publication of application: **09.09.2026**
(21) Application number: 24887483.6
(22) Date of filing: 26.07.2024
(51) Int. Cl.: B60Q 1/00, B60Q 1/068, F21S 41/657, F21S 45/43, F21S 45/48, F21S 45/50, F21S 45/465, F21V 17/10, F21V 31/00, B60Q 1/076, F21Y 115/10

(54) **VEHICLE LAMP, VEHICLE LAMP MODULE, AND VEHICLE**

(30) Priority: 10.11.2023 CN 202311498431
(71) Applicant: Yinwang Intelligent Technologies Co., Ltd., Shenzhen, Guangdong 518110 (CN)
(72) Inventor: LUO, Wenzheng, Shenzhen, Guangdong 518129 (CN); HUANG, Zhiyang, Shenzhen, Guangdong 518129 (CN); JIA, Lirui, Shenzhen, Guangdong 518129 (CN)
(74) Representative: Maiwald GmbH
(86) International application number: PCT/CN2024/107974
(87) International publication number: WO 2025/097861

(57) **Abstract**

A vehicle light (100), a vehicle light module (10), and a vehicle (1000) are disclosed. The vehicle light (100) includes a housing (60), a cover body (70), and a vehicle light module (10). The housing (60) encloses an accommodation cavity (601) with a housing opening (602). The cover body (70) is detachably connected to the housing (60) and covers the housing opening (602) in a sealed manner. A lens (32) of the vehicle light module (10) is accommodated in the accommodation cavity (601). The vehicle light module (10) includes a light-emitting side and a backlight side that are opposite to each other in a first direction (X). The housing opening (602) is located on the backlight side of the vehicle light module (10), and an orthographic projection of the vehicle light module (10) on a plane on which the housing opening (602) is located falls within a range of the housing opening (602) in the first direction (X). When the vehicle light module (10) is damaged, the cover body (70) may be opened to repair the vehicle light module (10), so that high costs of replacing the vehicle light module (10) can be reduced. In addition, when assembly of the vehicle light (100) is completed and inspection is performed, if it is found that the vehicle light module (10) is faulty, there is no need to replace the entire vehicle light (100). Opening the cover body (70) to repair the vehicle light module (10) can reduce production costs.

## Description

This application claims priority to Chinese Patent Application No. 202311498431.0, filed with the China National Intellectual Property Administration on November 10, 2023 and entitled "VEHICLE LIGHT, VEHICLE LIGHT MODULE, AND VEHICLE", which is incorporated herein by reference in its entirety.

### TECHNICAL FIELD

This application relates to the field of lighting technologies of transportation means, and in particular, to a vehicle light, a vehicle light module, and a vehicle.

### BACKGROUND

With innovation and continuous development of vehicle technologies, vehicle lights also develop from an original single lighting attribute to a personalized appearance, secure interaction, and intelligent driving (a small size and high power). A cost price of a vehicle light module in the vehicle light is also increased accordingly.

In a related technology, when there is a minor impact on a vehicle light, or a defect of a vehicle light is found during pre-delivery inspection, the entire vehicle light needs to be replaced. This results in high use and repair costs of the vehicle light of a vehicle on a user side and high production costs of the vehicle light on a producer side.

### SUMMARY

Embodiments of this application provide a vehicle light, a vehicle light module, and a vehicle, to reduce repair and use costs on a user side and production costs on a producer side.

According to a first aspect, an embodiment of this application provides a vehicle light. The vehicle light includes a housing, a cover body, and a vehicle light module. The housing encloses an accommodation cavity with a housing opening. The cover body is detachably connected to the housing and covers the housing opening in a sealed manner. A lens of the vehicle light module is accommodated in the accommodation cavity. The vehicle light module includes a light-emitting side and a backlight side that are opposite to each other in a first direction. The housing opening is located on the backlight side of the vehicle light module. An orthographic projection of the vehicle light module on a plane on which the housing opening is located falls within a range of the housing opening in the first direction. In this embodiment, the cover body is detachably connected to the housing. In other words, based on this, after the vehicle light is delivered, the cover body may still be detached from the housing as required, and the cover body can be assembled to the housing again. In this design, when the vehicle light module is damaged, the cover body may be opened to repair the vehicle light module, thereby reducing high costs of replacing the vehicle light module. In addition, when assembly of the vehicle light is completed and inspection is performed, if it is found that the vehicle light module is faulty, there is no need to replace the entire vehicle light. Opening the cover body to repair the vehicle light module can reduce production costs. The orthographic projection of the vehicle light module on the plane on which the housing opening is located falls within the range of the housing opening in the first direction. Therefore, it can be ensured that the entire vehicle light module can be smoothly taken out of the housing opening, so that the vehicle light module can be conveniently taken out of the accommodation cavity having small space, to facilitate repair. In addition, the vehicle light module can be conveniently replaced. This improves a subsequent repair and maintenance capability for the vehicle light on a user side.

In some embodiments, the housing includes a plurality of enclosing walls. The enclosing wall that is directly opposite to the vehicle light module and that is located on the backlight side of the vehicle light module in the first direction is disposed as a first enclosing wall. The first enclosing wall is provided with the housing opening. A first fastening hole is provided on a side that is of the first enclosing wall and that is away from the accommodation cavity. The vehicle light further includes a first fastener, and the first fastener passes through the cover body and is detachably fastened to the first fastening hole, to fasten the cover body to the first enclosing wall. In this embodiment, the first fastener passes through the cover body and is detachably fastened to the first fastening hole, and the first fastening hole is provided on the side that is of the first enclosing wall and that is away from the accommodation cavity. Therefore, based on this, the first fastener can be detached or mounted outside the vehicle light, so that detachment and mounting efficiency can be improved. In addition, a structure using cooperation and fastening of the first fastener and the first fastening hole is simple and has high stability.

In some embodiments, a first annular groove is provided on the side that is of the first enclosing wall and that is away from the accommodation cavity. The housing opening is located in a region surrounded by the first annular groove. The first fastening hole is located outside the region surrounded by the first annular groove. The vehicle light further includes a first sealing ring. The first sealing ring is disposed in the first annular groove. The first sealing ring is clamped between an inner wall of the first annular groove and the cover body.

In some embodiments, a bottom wall of the first annular groove is provided with an annular protrusion. The annular protrusion protrudes from the bottom wall of the first annular groove toward the cover body. The annular protrusion surrounds the housing opening. In this embodiment, the housing opening is located in the region surrounded by the first annular groove, and the first fastening hole is located outside the region surrounded by the first annular groove. In other words, a position at which the first fastener passes through the cover body is located outside the region surrounded by the first annular groove. Therefore, even though gas passes through a through hole that is of the cover body and that is used for the first fastener to pass through, the gas is blocked by the first sealing ring and cannot enter the accommodation cavity between a first portion of the cover body and the first enclosing wall, so that air tightness between the cover body and the first enclosing wall of the housing can be effectively improved.

In some embodiments, the cover body is provided with a cover body opening. The vehicle light module includes a body. The body is connected to the cover body in a sealed manner, to cover the cover body opening in a sealed manner. In this embodiment, a second portion is provided with the cover body opening, and the body is connected to the cover body in a sealed manner, to cover the cover body opening in a sealed manner. Therefore, a part of the vehicle light module is definitely exposed to the outside of the accommodation cavity through the cover body opening. This helps improve a capability of the vehicle light module to exchange heat with the outside of the accommodation cavity, and improve heat dissipation efficiency of the vehicle light module.

In some embodiments, the body is provided with a second annular groove and a second fastening hole. The cover body opening is located in a region surrounded by the second annular groove. The second fastening hole is located in the region surrounded by the second annular groove and is located outside the cover body opening. The vehicle light further includes a second sealing ring and a second fastener. The second sealing ring is disposed in the second annular groove. The second fastener passes through the cover body and is detachably fastened to the second fastening hole, to fasten the cover body to the body. The second sealing ring is clamped between the cover body and an inner wall of the second annular groove. In this embodiment, the second fastener passes through a second assembly hole and is detachably connected to the second fastening hole. Therefore, the second portion can be fastened to a fastening portion, and the fastening portion can also be separated from the second portion, so that the second portion and the fastening portion are assembled and detached, to assemble and detach the vehicle light module and the cover body. This facilitates repair and replacement of the vehicle light module. The cover body opening is located in the region surrounded by the second annular groove, and the second fastening hole is located in the region surrounded by the second annular groove. In other words, a position at which the second fastener passes through the second portion is located in the region surrounded by the second annular groove. Therefore, even though gas passes through a through hole that is of the second portion and that is used for the second fastener to pass through, the gas is blocked by the second sealing ring and cannot enter the accommodation cavity between the second portion of the cover body and the fastening portion, so that air tightness between the fastening portion and the second portion of the cover body can be effectively improved.

In some embodiments, the vehicle light module further includes a heat dissipator, and at least a part of the heat dissipator extends out of the accommodation cavity from the cover body opening. In this embodiment, the part of the heat dissipator of the vehicle light module can extend out of the accommodation cavity from the cover body opening. Therefore, the heat dissipator can conduct a large amount of heat to the outside of the accommodation cavity through the part outside the cover body opening, and heat is effectively dissipated, so that heat dissipation performance of the vehicle light module can be effectively improved. Moreover, because the part of the heat dissipator of the vehicle light module is located outside the accommodation cavity, a length of the heat dissipator in the first direction may be appropriately increased without being limited by space of the accommodation cavity. An increase in the length of the heat dissipator in the first direction can increase a heat exchange area of the heat dissipator, so that heat dissipation effect of the heat dissipator on the vehicle light module can be effectively improved.

In some embodiments, the vehicle light further includes a bracket. The bracket is connected to the housing and is located in the accommodation cavity. The vehicle light module includes the fastening portion attached to the bracket. The fastening portion is located on a side that is of the bracket and that faces the cover body. The fastening portion is provided with a fastening through hole. For ease of distinguishing, the fastening through hole on the fastening portion is disposed as a third fastening hole. The vehicle light further includes a third fastener. The third fastener passes through the third fastening hole and is fastened to the bracket, to fasten the vehicle light module to the bracket. In this embodiment, because the third fastener passes through the third fastening hole to fasten the fastening portion to the bracket, and the fastening portion is located on the side that is of the bracket and that faces the cover body, a direction in which the third fastener passes through the third fastening hole is from the backlight side to the light-emitting side. The cover body and the housing opening are located on the backlight side of the vehicle light module. In this case, the cover body is detached from the housing, so that the third fastener can be conveniently operated through the housing opening, to facilitate detachment or assembly of the third fastener, and improve operability.

In some embodiments, the cover body is provided with the cover body opening. The vehicle light module includes the body. The body includes the fastening portion. The body is connected to the cover body in a sealed manner, to cover the cover body opening in a sealed manner. The third fastening hole is located outside a region surrounded by a connection position at which the body is connected to the cover body in a sealed manner. In this embodiment, because the third fastening hole is located outside the region surrounded by the connection position at which the body is connected to the cover body in a sealed manner, gas can be prevented from entering the accommodation cavity through the third fastening hole, so that sealing performance of the accommodation cavity of the vehicle light is improved.

In some embodiments, the third fastening hole is provided directly opposite to the housing opening in the first direction. In this embodiment, the third fastening hole is provided directly opposite to the housing opening in the first direction. Therefore, based on this, the third fastener can be more conveniently detached or assembled through the housing opening.

In some embodiments, the vehicle light further includes a drive component. The drive component is connected to the housing and is configured to drive the bracket to move relative to the housing. The cover body includes the first portion detachably connected to the housing, the second portion detachably connected to the body, and a connection portion connected between the first portion and the second portion. The second portion is provided with the cover body opening. The body of the vehicle light module is connected to the second portion in a sealed manner, to cover the cover body opening in a sealed manner. The connection portion is made of a flexible material, so that the connection portion is deformable. In this embodiment, because the body of the vehicle light module is connected to the second portion in a sealed manner and covers the cover body opening in a sealed manner, it can be ensured that a part of the body of the vehicle light module is exposed to the outside of the accommodation cavity through the cover body opening. For example, the part of the heat dissipator is exposed to the outside of the accommodation cavity. This can effectively improve the heat dissipation performance of the vehicle light module. In addition, because the first portion is connected to the housing in a sealed manner and the second portion is connected to the fastening portion of the body of the vehicle light module in a sealed manner, it can be ensured that the cover body and the body of the vehicle light module cover the housing opening in a sealed manner. This ensures the sealing performance of the accommodation cavity. Besides, the drive component may further drive the bracket to move, and a movement of the bracket drives the connection portion of the flexible material to extend and move. In this way, the cover body does not limit the movement of the bracket and a position of the bracket can be adjusted, so that adjustment of an emergent light ray of the vehicle light module of the vehicle light in this embodiment can be ensured. Moreover, the first portion is detachably connected to the housing and the second portion is detachably connected to the fastening portion of the body. This can further facilitate replacement and repair of the vehicle light module.

According to a second aspect, an embodiment of this application provides a vehicle light module that is used in a vehicle light. The vehicle light includes a housing and a cover body. The housing encloses an accommodation cavity with a housing opening. The cover body is detachably connected to the housing and covers the housing opening in a sealed manner. A lens of the vehicle light module is accommodated in the accommodation cavity. The vehicle light module includes a light-emitting side and a backlight side that are opposite to each other in a first direction. The housing opening is located on the backlight side of the vehicle light module. An orthographic projection of the vehicle light module on a plane on which the housing opening is located falls within a range of the housing opening in the first direction.

The vehicle light module includes a casing, an optical component located in the casing, and a fastening portion located outside the casing. The fastening portion is provided with a fastening through hole, to detachably connect to a bracket of the vehicle light. The fastening portion is attached to a side that is of the bracket and that faces away from the light-emitting side. The fastening through hole is directly opposite to the housing opening on the backlight side of the vehicle light in the one direction. In this embodiment, when the vehicle light module is damaged, the cover body may be opened to repair the vehicle light module, so that high costs of replacing the vehicle light module can be reduced. In addition, when assembly of the vehicle light is completed and inspection is performed, if it is found that the vehicle light module is faulty, there is no need to replace the entire vehicle light. Opening the cover body to repair the vehicle light module can reduce production costs. Besides, because the fastening portion is located on a side that is of the bracket and that faces the cover body, a direction in which a fastener for cooperating with the fastening through hole passes through a fastening hole is from the backlight side to the light-emitting side. The cover body and the housing opening are located on the backlight side of the vehicle light module. In this case, the cover body is detached from the housing, so that the fastener in the fastening through hole can be conveniently operated through the housing opening, to facilitate detachment or assembly of the fastener, and improve operability.

In some embodiments, an annular groove and a fastening hole are provided on a side that is of the fastening portion and that faces away from the light-emitting side. The annular groove is configured to place a sealing ring, and the sealing ring is clamped between the cover body and an inner wall of the annular groove. The fastening hole is configured to detachably connect to the cover body. The fastening hole is located in a region surrounded by the annular groove. The fastening through hole is formed by penetrating the fastening portion in the first direction, and is located outside the region surrounded by the annular groove. In this embodiment, the fastening hole may be configured to detachably connect to the cover body. This facilitates assembly and detachment of the vehicle light module and the cover body, and facilitates repair and replacement of the vehicle light module. Because the fastening hole is located in the region surrounded by the annular groove, air tightness between the fastening portion and the cover body can be effectively improved.

In some embodiments, a bottom wall of the annular groove is provided with an annular protrusion. The annular protrusion protrudes from the bottom wall of the annular groove in a direction away from the light-emitting side. In this embodiment, the bottom wall of the annular groove is provided with the annular protrusion, so that air tightness between the inner wall of the annular groove and the cover body can be improved.

In some embodiments, the vehicle light module further includes a heat dissipator. The heat dissipator is disposed on a side that is of the casing and that faces away from the light-emitting side, and is located in the region surrounded by the annular groove. In this embodiment, heat dissipation performance of the vehicle light module can be improved by using the heat dissipator.

In some embodiments, the vehicle light module further includes a fan. The fan is connected to a side that is of the heat dissipator and that is away from the casing. In this embodiment, heat exchange efficiency of the heat dissipator may be improved by using the fan, and heat of the heat dissipator is quickly dissipated, to further improve the heat dissipation efficiency of the vehicle light module.

According to a third aspect, an embodiment of this application provides a vehicle light, including a light housing and the vehicle light module according to any one of the second aspect. The vehicle light module is assembled in the light housing.

According to a fourth aspect, an embodiment of this application provides a vehicle, including a vehicle main body and the vehicle light according to any one of the first aspect or the third aspect. The vehicle light is connected to the vehicle main body.

According to a fifth aspect, an embodiment of this application provides a transportation means, including a transportation main body and the vehicle light according to any one of the first aspect or the third aspect. The vehicle light is connected to the transportation main body.

### BRIEF DESCRIPTION OF DRAWINGS

To describe the technical solutions in embodiments of the present invention or in the prior art more clearly, the following briefly describes the accompanying drawings for describing embodiments or the prior art.
FIG. 1 is a diagram of a structure of a vehicle according to an embodiment of this application;
FIG. 2 is a diagram of a structure of a vehicle light according to an embodiment of this application;
FIG. 3 is a brief diagram of a structure of the vehicle light according to the embodiment in FIG. 2;
FIG. 4 is a brief diagram of a structure of a vehicle light module according to an embodiment of this application;
FIG. 5 is a brief diagram of a structure of a light housing of the vehicle light according to the embodiment in FIG. 2;
FIG. 6 is a partially enlarged brief diagram at a position A in FIG. 5;
FIG. 7 is a brief exploded diagram of the vehicle light according to the embodiment in FIG. 3;
FIG. 8 is a partially enlarged diagram at a position B in FIG. 7; and
FIG. 9 is diagram of another structure of a light housing of the vehicle light in the embodiment in FIG. 2 according to an embodiment of this application.

Descriptions of reference numerals:
X: first direction;
1000: vehicle; 100: vehicle light; 200: vehicle main body; 1: vehicle body; 2: wheel; 3: drivetrain; 4: powertrain; 5: electronic control unit;
10: vehicle light module; 20: body; 21: casing; 211: accommodating cavity; 212: end cover; 213: side wall; 22: fastening portion; 221: second fastening hole; 222: second annular groove; 223: third fastening hole; 30: optical component; 31: light source; 32: lens; 41: heat dissipator; 42: fan;
50: light housing; 60: housing; 601: accommodation cavity; 602: housing opening; 61: main body portion; 62: light transmission portion; 70: cover body; 701: cover body opening; 71: first portion: 711: first assembly hole; 72: second portion; 721: second assembly hole; 73: connection portion; 80: enclosing wall; 81: first enclosing wall; 811: first fastening hole; 812: first annular groove;
91: annular protrusion; 92: first fastener; 93: first sealing ring; 94: second fastener; 95: second sealing ring; 96: bracket; 961: third assembly hole; 97: third fastener; 98: drive component; 981: lead screw.

### DESCRIPTION OF EMBODIMENTS

The following first explains and describes some terms in embodiments of this application.

In the specification, claims, and accompanying drawings of embodiments of this application, the terms "first", "second", "third", "fourth", and the like are intended to distinguish between similar objects but do not necessarily indicate a specific order or sequence. It should be understood that data termed in such a way is interchangeable in proper circumstances, so that embodiments of this application described herein can be implemented in an order other than the order illustrated or described herein. In addition, the terms "include" and "have" and any variants thereof are intended to cover the non-exclusive inclusion. For example, a process, method, system, product, or device that includes a series of steps or units is not necessarily limited to those expressly listed steps or units, but may include other steps or units not expressly listed or inherent to such a process, method, product, or device.

In this specification, the following explains terms such as "perpendicular" and "parallel".

Perpendicular: Perpendicular defined in this application is not limited to absolutely perpendicular intersection (a 90-degree included angle), allowing a case in which there is no absolutely perpendicular intersection caused by an assembly tolerance, a design tolerance, impact of structure flatness, or another factor and allowing an error within a small angle range. For example, an assembly error range of 80 degrees to 100 degrees may be understood as being perpendicular.

Parallel: Parallel defined in this application is not limited to being absolutely parallel. This definition of parallel may be understood as basically parallel, allowing a case in which there is no absolute parallelism caused by an assembly tolerance, a design tolerance, impact of structure flatness, or another factor. However, this application also defines this case as being parallel.

Embodiments of this application provide a vehicle light, to facilitate assembly and repair of the vehicle light and replacement of a vehicle light module of the vehicle light, so that repair costs of a user are reduced. The vehicle light provided in this embodiment of this application may be used in a vehicle (for example, a car, a bus, or a truck that is fueled by gasoline, electricity, or a hybrid of gasoline and electricity), or may be used in a hardware system of an airplane, a ship, a train, a robot, or the like, to perform displaying and lighting functions. Embodiments of this application further provide a corresponding vehicle, a vehicle light module, and the like. Details are separately described below.

The following describes an application scenario of embodiments of this application by using an example.

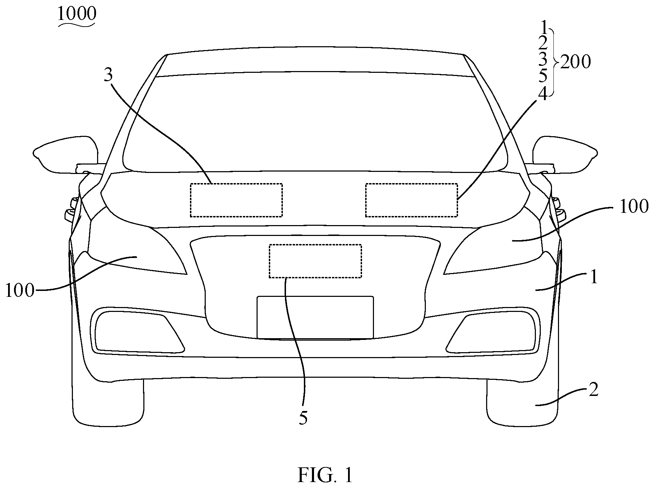

FIG. 1 is a diagram of a structure of a vehicle 1000 according to an embodiment of this application. The vehicle 1000 in this embodiment of this application may be an electric vehicle 1000, a fuel vehicle 1000, or a hybrid vehicle 1000.

Refer to FIG. 1. The vehicle 1000 includes a vehicle main body 200 and a vehicle light 100 mounted on the vehicle main body 200. The vehicle light 100 is used for display and lighting of the vehicle main body 200.

The vehicle main body 200 includes a vehicle body 1, a wheel 2, a drivetrain 3, a powertrain 4, and an electronic control unit 5. The electronic control unit 5 is configured to control the drivetrain 3, the powertrain 4, the vehicle light 100, and the like to work. The drivetrain 3 is configured to provide power for the powertrain 4. The powertrain 4 can drive the wheel 2 to rotate, to drive the vehicle 1000. The vehicle light 100, the wheel 2, the drivetrain 3, the powertrain 4, and the electronic control unit 5 are connected to the vehicle body 1.

The drivetrain 3 may be a battery of the electric vehicle 1000, may be a fuel engine of the fuel vehicle 1000, or may be a battery and a fuel engine of the hybrid vehicle 1000.

The vehicle main body 200 further includes an air conditioning system. The air conditioning system is configured to adjust a temperature of the drivetrain 3, the powertrain 4, or the vehicle light 100, so that the drivetrain 3, the powertrain 4, or the vehicle light 100 has a more appropriate ambient temperature.

The vehicle light 100 in this embodiment may include a headlight, a taillight, another decorative light, and the like. A light source 31 in the vehicle light 100 may be a light emitting diode (Light Emitting Diode, LED) or a laser diode (Laser Diode, LD) device. A vehicle light module 10 of the vehicle light 100 in this embodiment may be a digital light processing (Digital Light Processing, DLP) light group which is referred to as a DLP light group for short. The DLP light group uses a DMD (Digital Micromirror Device) chip for processing. In addition, the vehicle light module 10 in this embodiment may alternatively be other types of vehicle light modules 10 such as a micro matrix light group.

In some implementations, the air conditioning system may cool and dissipate heat for the vehicle light 100. For example, a cooling plate heat exchanger of the air conditioning system is used to cool and dissipate heat for the vehicle light module 10 of the vehicle light 100, to improve heat dissipation effect of the vehicle light 100.

The following describes a vehicle light 100 provided in embodiments of this application by using an example with reference to the foregoing application scenario.

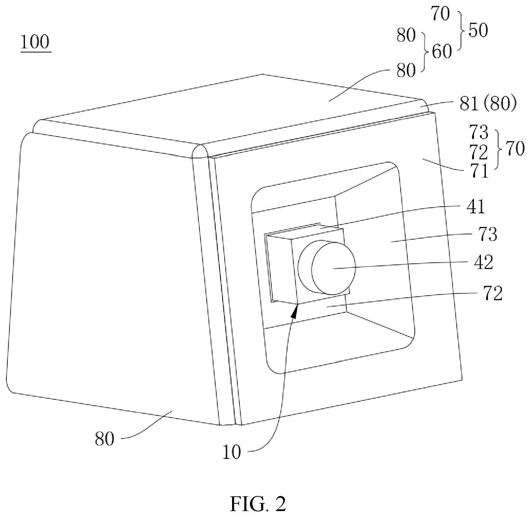

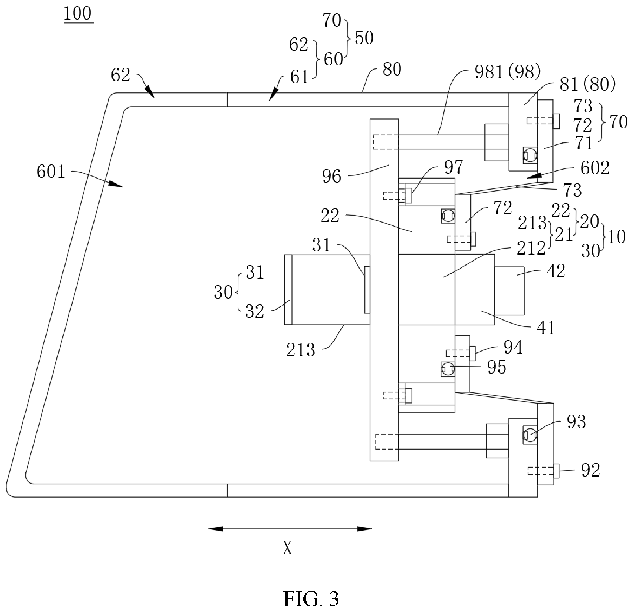

FIG. 2 is a diagram of a structure of a vehicle light 100 according to an embodiment of this application. FIG. 3 is a brief diagram of a structure of the vehicle light 100 according to the embodiment in FIG. 2. The vehicle light 100 in this embodiment of this application may be used in the vehicle 1000 in FIG. 1, and may also be used in a transportation means other than the vehicle 1000 in FIG. 1, for example, an airplane, a ship, a train, or a robot, to implement lighting.

Refer to FIG. 2 and FIG. 3. The vehicle light 100 includes a light housing 50 and a vehicle light module 10 located in the light housing 50. The vehicle light module 10 is configured to implement lighting and interaction functions of the vehicle light 100. The interaction function of the vehicle light module 10 includes but is not limited to identifying a complex road condition, projecting text or image information on a road, and the like.

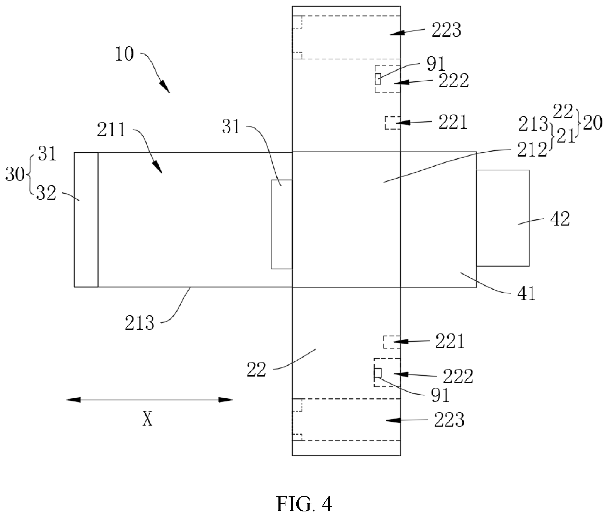

FIG. 4 is a brief diagram of a structure of a vehicle light module 10 according to an embodiment of this application. The vehicle light module 10 in this embodiment of this application may be a DLP light group, may be a micro matrix light group, or may be other light groups such as an ISC (Interactive Signal Communication) light group and an SIDP (Surrounding Interactive Dynamic Projection) light group. The vehicle light module 10 in this embodiment of this application may be used in the vehicle light 100 in the embodiment in FIG. 2, and may also be used in a lighting system in another transportation means.

Refer to FIG. 4. The vehicle light module 10 includes a body 20 and an optical component 30. The body 20 is configured to connect to a housing 60 of the vehicle light 100, to connect the vehicle light module 10 to the housing 60 of the vehicle light 100. The optical component 30 is configured to implement lighting and interaction functions of the vehicle light module 10. For example, the interaction function is the interaction function in the embodiment in FIG. 2. Details are not described herein again.

The body 20 includes a casing 21 and a fastening portion 22 located on the casing 21. The casing 21 encloses an accommodating cavity 211. The optical component 30 is disposed in the accommodating cavity 211. The fastening portion 22 is configured to fasten the casing 21 to the housing 60 of the vehicle light 100.

It may be understood that the casing 21 and the fastening portion 22 of the body 20 may be integrally disposed, or may be connected together later, for example, through welding, assembly and fastening (a bolt, a screw, and the like), or bonding. A shape of the casing 21 is not specifically limited, and needs to be specifically designed based on a specific mounting scenario.

The optical component 30 includes a light source 31, a lens 32, a reflector (not shown in the figure), a processing chip (not shown in the figure), and the like.

The light source 31 may be a UHP, an LED, a LASER, and the like. Certainly, the light source 31 may alternatively be another lightning light source 31. The light source 31 is disposed in the accommodating cavity 211, and is configured to emit a light ray.

The reflector is disposed in the accommodating cavity 211, and is configured to reflect the light ray emitted by the light source 31, so that the light ray is transmitted from the lens 32.

There may be a plurality of lenses 32, or there may be one lens 32. Specifically, the lens 32 is connected to an end of the casing 21, and the light ray emitted by the light source 31 is emitted out of the casing 21 through the lens 32. For ease of description, a direction in which the light ray emitted by the light source 31 is emitted through the lens 32 is a light-emitting direction, and a position at which the light ray emitted by the light source 31 is emitted is a light-emitting side of the vehicle light module 10. Specifically, a side on which the lens 32 is mounted on the casing 21 is the light-emitting side of the vehicle light module 10. A direction opposite to the light-emitting direction is a backlight direction, and a side that is opposite to the light-emitting side of the vehicle light module 10 in a first direction X is a backlight side of the vehicle light module 10. In some implementations, the first direction X is also a length direction of the vehicle light module 10 (a length of the vehicle light module 10 is greater than a width and a height of the vehicle light module 10).

The processing chip may include a control board and a DMD chip. The light source 31 is refracted to the DMD chip. After the DMD chip receives a control signal from the control board, a light ray is emitted to a projection screen. It may be understood that the processing chip may further include some other functional chips.

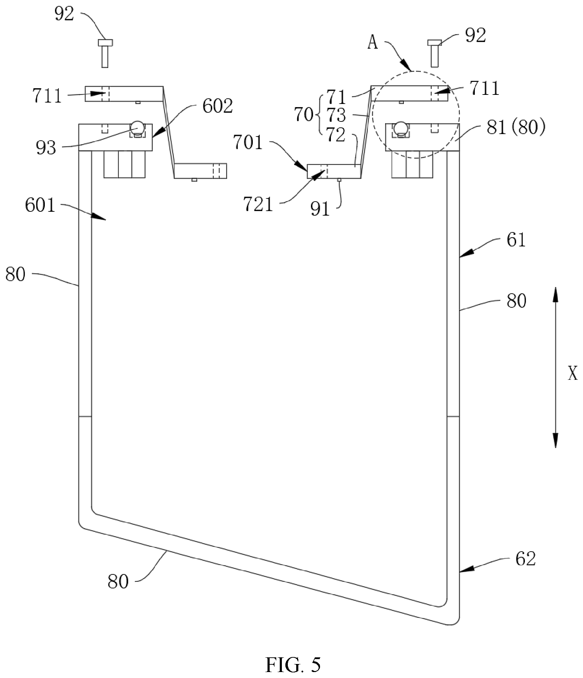

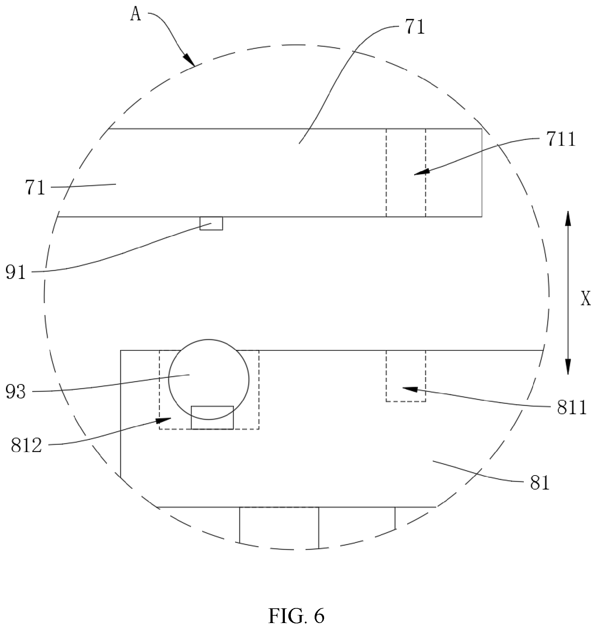

FIG. 5 is a brief diagram of a structure of a light housing 50 of the vehicle light 100 according to the embodiment in FIG. 2. FIG. 6 is a partially enlarged brief diagram at a position A in FIG. 5.

Refer to FIG. 5 and FIG. 6. In some embodiments, the light housing 50 includes a housing 60 and a cover body 70.

In some implementations, the housing 60 includes a main body portion 61 and a light transmission portion 62. The light transmission portion 62 is a front cover of the light housing 50, and is configured to transmit a light ray. The light transmission portion 62 is bonded to the main body portion 61 in a sealed manner and is enclosed with the main body portion 61 to form an accommodation cavity 601 with a housing opening 602. A part or all of the vehicle light module 10 is located in the accommodation cavity 601. For example, a lens 32 of a vehicle light module 10 is located in the accommodation cavity 601. For another example, a part of a casing 21 of the vehicle light module 10 is located in the accommodation cavity 601, and a part of the casing 21 is located outside the accommodation cavity 601. For still another example, the entire vehicle light module 10 is located in the accommodation cavity 601.

After the light transmission portion 62 is forcibly detached from the main body portion 61, connection surfaces of the main body portion 61 and the light transmission portion 62 are affected. When the light transmission portion 62 and the main body portion 61 are bonded again, it cannot be ensured that sealing performance of a connection position between the main body portion 61 and the light transmission portion 62 can meet a standard. Therefore, the light transmission portion 62 and the main body portion 61 in this embodiment cannot be detached or mounted after delivery.

In some other implementations, the main body portion 61 and the light transmission portion 62 may alternatively be integrally disposed, to improve sealing performance of a connection position between the main body portion 61 and the light transmission portion 62.

It may be understood that shapes of the housing 60 and the light transmission portion 62 are not specifically limited in this application, and may be regular shapes or irregular shapes. A shape of the housing 60 in the accompanying drawings is only for reference, and is not a limited shape of the housing 60 in this embodiment.

In some implementations, the cover body 70 is connected to the housing 60 in a sealed manner and covers the housing opening 602 in a sealed manner. It should be noted that, in this implementation, that the cover body 70 covers the housing opening 602 in a sealed manner includes a solution in which the cover body 70 completely covers the housing opening 602 in a sealed manner, and also includes a solution in which the cover body 70 and another component jointly cover the housing opening 602 in a sealed manner. For example, in some specific implementations, the cover body 70 is also provided with an opening, and the opening on the cover body 70 is sealed by using another component. For example, the opening on the cover body 70 is sealed by using the casing 21 of the vehicle light module 10. In this implementation, the cover body 70 cooperates with the housing 60, so that air tightness of the accommodation cavity 601 can be ensured. This effectively improves a working environment of the vehicle light module 10 in the accommodation cavity 601, prolongs a service life, and improves light-emitting efficiency.

The cover body 70 is detachably connected to the housing 60. To be specific, after the vehicle light 100 is delivered, the cover body 70 may still be detached from the housing 60 as required and the cover body 70 can be reassembled on the housing 60, and sealing performance between the cover body 70 and the housing 60 can be ensured. In this design, when the vehicle light module 10 is damaged, the cover body 70 may be opened to repair the vehicle light module 10, so that high costs of replacing the vehicle light module 10 can be reduced. In addition, when assembly of the vehicle light 100 is completed and inspection is performed, if it is found that the vehicle light module 10 is faulty, there is no need to scrap the light housing 50 (by detaching the main body portion 61 from the light transmission portion 62). The cover body 70 may be opened to repair the vehicle light module 10. It may be understood that repairing in this implementation includes repairing the vehicle light module 10 in the accommodation cavity 601, and also includes repairing, in some cases, the vehicle light module 10 after the vehicle light module 10 is taken out of the housing opening 602.

In this implementation, a method for taking the vehicle light module 10 out of the housing opening 602 includes dividing the vehicle light module 10 in the accommodation cavity 601 into a plurality of pieces for taking out, and also includes directly taking the entire vehicle light module 10 out of the housing opening 602. It may be understood that, if the entire vehicle light module 10 needs to be taken out of the housing opening 602, a diameter of the housing opening 602 needs to be large enough, to help the entire vehicle light module 10 pass through the housing opening 602.

In some implementations, the housing opening 602 is located on a backlight side of the vehicle light module 10, and an orthographic projection of the vehicle light module 10 on a plane on which the housing opening 602 is located falls within a range of the housing opening 602 in a first direction X. In this implementation, the orthographic projection of the vehicle light module 10 on the plane on which the housing opening 602 is located falls within the range of the housing opening 602 in the first direction X. Therefore, it can be ensured that the entire vehicle light module 10 can be smoothly taken out of the housing opening 602, so that the vehicle light module 10 can be conveniently taken out of the accommodation cavity 601 having small space, to facilitate repair. In addition, the vehicle light module 10 can be conveniently replaced. This improves a subsequent repair and maintenance capability for the vehicle light 100 on a user side.

The housing opening 602 is located on the backlight side of the vehicle light module 10. Generally, a length direction of the vehicle light module 10 is basically consistent with the first direction X, and a length of the vehicle light module 10 is generally greater than a height and a width of the vehicle light module 10. In this case, the diameter of the housing opening 602 can be effectively reduced, so that structural strength of the housing 60 is enhanced. In addition, because the housing opening 602 is located on the backlight side of the vehicle light module 10, and a fastener for fastening the vehicle light module 10 is often in the first direction X. This also facilitates detachment and mounting of the fastener.

Refer to FIG. 5 and FIG. 6. In some embodiments, the cover body 70 is provided with a cover body opening 701. A part of the cover body 70 is configured to connect to the housing 60 in a sealed manner, and the other part of the cover body 70 is connected to the vehicle light module 10 in a sealed manner. The cover body opening 701 is covered by using the vehicle light module 10 in a sealed manner, and the housing opening 602 is covered by using the cover body 70 and the vehicle light module 10 in a sealed manner. In this embodiment, the cover body 70 and the vehicle light module 10 may cover the housing opening 602 in a sealed manner, to meet a requirement for the air tightness of the accommodation cavity 601. In addition, a part of the vehicle light module 10 may communicate with the outside of the accommodation cavity 601 through the cover body opening 701, so that the vehicle light module 10 can dissipate a large amount of heat through the part exposed to the outside of the accommodation cavity 601, and therefore, heat dissipation efficiency of the vehicle light module 10 is improved.

In some implementations, the cover body 70 includes a first portion 71 connected to the housing 60, a second portion 72 connected to the body 20, and a connection portion 73 connected between the first portion 71 and the second portion 72. The cover body opening 701 is provided on a middle part of the second portion 72. The first portion 71 is connected to the connection portion 73 in a sealed manner, and the second portion 72 is also connected to the connection portion 73 in a sealed manner.

In some implementations, the first portion 71, the connection portion 73, and the second portion 72 each are in a ring shape. The first portion 71 surrounds the connection portion 73, the connection portion 73 surrounds the second portion 72, and the second portion 72 surrounds to form the cover body opening 701. It may be understood that the first portion 71, the connection portion 73, and the second portion 72 each may be in a circular ring shape, may be in a rectangular ring shape, may be in a triangular ring shape, or may be in another ring structure.

Refer to FIG. 5 and FIG. 6. In some embodiments, the housing 60 includes a plurality of enclosing walls 80. Specifically, the plurality of enclosing walls 80 form the foregoing main body portion 61 and the light transmission portion 62. In the first direction X, the enclosing wall 80 that is directly opposite to the vehicle light module 10 and that is located on the backlight side of the vehicle light module 10 is disposed as a first enclosing wall 81, and the first enclosing wall 81 is provided with the housing opening 602. It should be noted that a shape of the first enclosing wall 81 is not specifically limited. The first enclosing wall 81 is roughly in a plate shape, for example, may be in a planar shape, may be in a curved shape, or may be in a shape of a combination of a planar shape and a curved shape. In addition, a quantity of first enclosing walls 81 forming the housing opening 602 is not limited. There may be one first enclosing wall 81, or may be a plurality of first enclosing walls 81.

A first fastening hole 811 is provided on a side that is of the first enclosing wall 81 and that is away from the accommodation cavity 601. The vehicle light 100 further includes a first fastener 92, and the first fastener 92 passes through the cover body 70 and is detachably fastened to the first fastening hole 811, to fasten the cover body 70 to the first enclosing wall 81.

Specifically, the first portion 71 is attached to the side that is of the first enclosing wall 81 and that is away from the accommodation cavity 601, and the first fastener 92 passes through the first portion 71 of the cover body 70 and is detachably fastened to the first fastening hole 811, to fasten the first portion 71 to the first enclosing wall 81.

Specifically, the first portion 71 is provided with a first assembly hole 711 at a position corresponding to the first fastening hole 811, and the first fastener 92 passes through the first assembly hole 711 and is fastened to the first fastening hole 811.

In some implementations, the first fastening hole 811 is a threaded hole, and the first fastener 92 is a bolt or a screw.

In some other implementations, the first fastening hole 811 may alternatively be a pin hole, and the first fastener 92 is a pin. The first portion 71 is fastened to the first enclosing wall 81 by inserting the pin into the pin hole.

In this embodiment, the first fastener 92 passes through the cover body 70 and is fastened to the first fastening hole 811, to fasten the cover body 70 to the first enclosing wall 81 of the housing 60. Therefore, the first fastener 92 can be controlled from the outside of the accommodation cavity 601, to help detach or assemble the first fastener 92 from the outside of the accommodation cavity 601, and help separate the cover body 70 from the first enclosing wall 81.

It may be understood that, in some other implementations, the cover body 70 may alternatively be detachably connected to the housing 60 through snap-fit clamping or a magnetic connection or in another manner.

Because the first fastener 92 passes through the cover body 70 and is fastened to the first fastening hole 811, the first assembly hole 711 that is of the cover body 70 and that is used for mounting the first fastener 92 is prone to water and air leakage. As a result, the air tightness of the accommodation cavity 601 cannot meet a requirement. Refer to FIG. 5 and FIG. 6. In some embodiments, a first annular groove 812 is provided on the side that is of the first enclosing wall 81 and that is away from the accommodation cavity 601. The housing opening 602 is located in a region surrounded by the first annular groove 812, and the first fastening hole 811 is located outside the region surrounded by the first annular groove 812. The vehicle light 100 further includes a first sealing ring 93. The first sealing ring 93 is disposed in the first annular groove 812, and the first sealing ring 93 is clamped between an inner wall of the first annular groove 812 and the cover body 70. Specifically, the first sealing ring 93 is clamped between the first portion 71 and the inner wall of the first annular groove 812, to ensure sealing performance. In this embodiment, the housing opening 602 is located in the region surrounded by the first annular groove 812, and the first fastening hole 811 is located outside the region surrounded by the first annular groove 812. In other words, a position at which the first fastener 92 passes through the cover body 70 is located outside the region surrounded by the first annular groove 812. Therefore, even though gas passes through a through hole (the first assembly hole 711) that is of the cover body 70 and that is used for the first fastener 92 to pass through, the gas is blocked by the first sealing ring 93 and cannot enter the accommodation cavity 601 between the first portion 71 of the cover body 70 and the first enclosing wall 81, so that air tightness between the cover body 70 and the first enclosing wall 81 of the housing 60 can be effectively improved.

To further improve sealing performance between the first portion 71 of the cover body 70 and the first enclosing wall 81, in some implementations, a bottom wall of the first annular groove 812 is provided with an annular protrusion 91, and the annular protrusion 91 protrudes from the bottom wall of the first annular groove 812 toward the cover body 70, and the annular protrusion 91 surrounds the housing opening 602. In this implementation, the inner wall of the first annular groove 812 is provided with the annular protrusion 91, and the annular protrusion 91 protrudes from the bottom wall of the first annular groove 812 toward the cover body 70. Therefore, a contact area between the annular protrusion 91 and the first sealing ring 93 can be increased, and a contact surface between the annular protrusion 91 and the first sealing ring 93 is a continuously curved surface, so that sealing performance between the first enclosing wall 81 and the first sealing ring 93 can be improved. In addition, a requirement for the air tightness between the cover body 70 and the first enclosing wall 81 can be met without applying excessively large pressure to the first enclosing wall 81 by the cover body 70. When the vehicle light module 10 uses processing chips, such as a DMD chip, whose performance is affected due to excessively large pressure, because the requirement for the air tightness between the cover body 70 and the first enclosing wall 81 can be met without applying excessively large pressure to the first enclosing wall 81 by the cover body 70, it can be ensured that the DMD chip is not subject to excessively large pressure while the air tightness between the cover body 70 and the first enclosing wall 81 is ensured, so that performance of the DMD chip is not affected.

In some implementations, a surface that is of the first portion 71 of the cover body 70 and that faces the first enclosing wall 81 is also provided with an annular protrusion 91 at a position corresponding to the first annular groove 812, and the annular protrusion 91 protrudes, toward the first enclosing wall 81, from the surface that is of the first portion 71 and that faces the first enclosing wall 81, so that air tightness between the first sealing ring 93 and the first portion 71 of the cover body 70 can also be ensured, to further reduce pressure applied by the first portion 71 of the cover body 70 to the first enclosing wall 81, and reduce impact on the performance of the DMD chip.

It may be understood that there may be one or more first sealing rings 93 and first annular grooves 812. A quantity of first sealing rings 93 and a quantity of first annular grooves 812 are not specifically limited in this embodiment of this application.

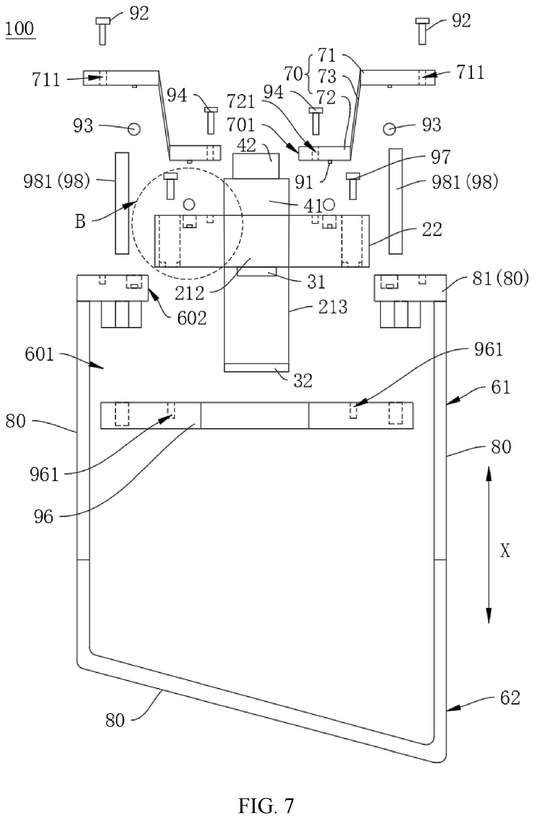

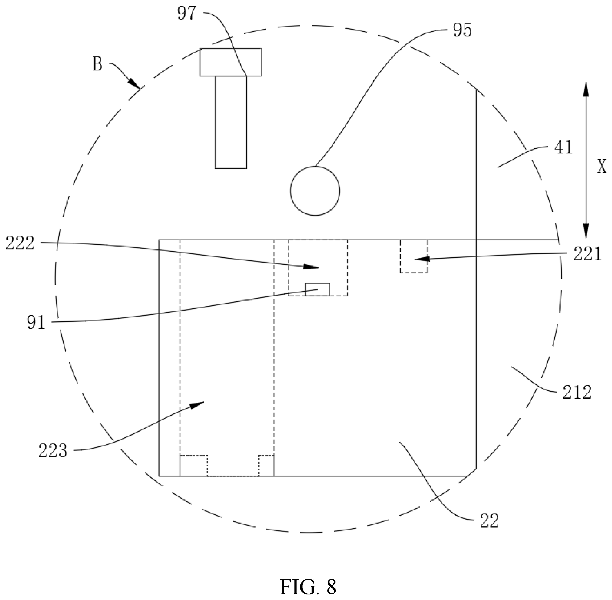

FIG. 7 is a brief exploded diagram of the vehicle light 100 according to the embodiment in FIG. 3. FIG. 8 is a partially enlarged diagram at a position B in FIG. 7.

Refer to FIG. 7 and FIG. 8. In some embodiments, the vehicle light module 10 is connected to the second portion 72 of the cover body 70 in a sealed manner through a fastening portion 22, and the cover body opening 701 is covered by using the vehicle light module 10 in a sealed manner. The fastening portion 22 is detachably connected to the second portion 72 of the cover body 70. In this embodiment, because the fastening portion 22 is detachably connected to the second portion 72 of the cover body 70, the cover body 70 may be conveniently separated from the vehicle light module 10. When the first portion 71 is also separated from the first enclosing wall 81 of the housing 60, the cover body 70 may be conveniently detached from the housing 60 and the vehicle light module 10, to open the housing opening 602. This helps take the vehicle light module 10 out of the housing opening 602 to replace or repair the vehicle light module 10. In addition, the second portion 72 is provided with the cover body opening 701. Therefore, a part of the vehicle light module 10 is definitely exposed to the outside of the accommodation cavity 601 through the cover body opening 701, to improve the heat dissipation efficiency of the vehicle light module 10.

Specifically, the cover body opening 701 on the second portion 72 is covered by using the body 20 of the vehicle light module 10 in a sealed manner.

Refer to FIG. 2 and FIG. 3. The casing 21 includes an end cover 212 facing the backlight side of the vehicle light module 10 and a side wall 213 disposed on the end cover 212. The side wall 213 is connected to a peripheral edge of the end cover 212 and is enclosed with the end cover 212 to form the accommodating cavity 211. The fastening portion 22 is connected to the peripheral edge of the end cover 212 in a sealed manner. The end cover 212 is configured to cover the cover body opening 701 on the second portion 72. The fastening portion 22 is disposed around the end cover 212, and the end cover 212 is not provided with an opening. In this way, the end cover 212 is connected to the second portion 72 in a sealed manner through the fastening portion 22. In other words, the end cover 212 and the fastening portion 22 may cover the cover body opening 701 in a sealed manner, to ensure the air tightness of the accommodation cavity 601.

In some implementations, the fastening portion 22 and the end cover 212 are integrally disposed. In this way, processing difficulty can be reduced, and sealing performance of a joint between the end cover 212 and the fastening portion 22 can also be improved. In addition, connection strength between the end cover 212 and the fastening portion 22 can be further improved, to improve fastening stability of the vehicle light module 10.

Refer to FIG. 7 and FIG. 8. In some implementations, the body 20 is provided with a fastening hole. For ease of distinguishing, the fastening hole of the body 20 is disposed as a second fastening hole 221. Specifically, the second fastening hole 221 is formed on the fastening portion 22, and the second portion 72 is provided with a second assembly hole 721 on a part corresponding to the second fastening hole 221. The vehicle light 100 further includes a second fastener 94, and the second fastener 94 passes through the second assembly hole 721 and is detachably connected to the second fastening hole 221. In this implementation, the second fastener 94 passes through the second assembly hole 721 and is detachably connected to the second fastening hole 221. Therefore, the second portion 72 can be fastened to the fastening portion 22, and the fastening portion 22 can also be separated from the second portion 72, so that the second portion 72 and the fastening portion 22 are assembled and detached, to assemble and detach the vehicle light module 10 and the cover body 70. This facilitates repair and replacement of the vehicle light module 10.

Specifically, the second portion 72 is attached to a side that is of the fastening portion 22 and that is away from the accommodating cavity 211, and the fastening portion 22 is located on an outer side that is of the side wall 213 and that is perpendicular to the first direction X. In this way, when the fastening portion 22 is fastened to the second portion 72, a normal layout of an optical component 30 in the accommodating cavity 211 is not affected.

In some implementations, the second fastening hole 221 is a threaded hole, and the second fastener 94 is a bolt or a screw.

In some other implementations, the second fastening hole 221 may alternatively be a pin hole, and the second fastener 94 is a pin. The second portion 72 is fastened to the fastening portion 22 by inserting the pin into the pin hole.

It may be understood that, in some other implementations, the second portion 72 may alternatively be detachably connected to the fastening portion 22 through snap-fit clamping or a magnetic connection or in another manner.

To ensure that the cover body opening 701 on the second portion 72 can be covered in a sealed manner, in some implementations, the body 20 is provided with an annular groove. For ease of distinguishing, the annular groove on the body 20 is disposed as a second annular groove 222. Specifically, the fastening portion 22 is provided with the second annular groove 222. The cover body opening 701 is located in a region surrounded by the second annular groove 222, and the second fastening hole 221 is located in the region surrounded by the second annular groove 222 and is located outside the cover body opening 701. The vehicle light 100 further includes a second sealing ring 95. The second sealing ring 95 is disposed in the second annular groove 222. The second fastener 94 passes through the cover body 70 and is detachably fastened to the second fastening hole 221, to fasten the second portion 72 of the cover body 70 to the fastening portion 22 of the body 20. The second sealing ring 95 is clamped between the cover body 70 and an inner wall of the second annular groove 222. Specifically, the second sealing ring 95 is clamped between the second portion 72 and the inner wall of the second annular groove 222, to ensure sealing performance. In this implementation, the cover body opening 701 is located in the region surrounded by the second annular groove 222, and the second fastening hole 221 is located in the region surrounded by the second annular groove 222. In other words, a position at which the second fastener 94 passes through the second portion 72 is located in the region surrounded by the second annular groove 222. Therefore, even though gas passes through a through hole (the second assembly hole 721) that is of the second portion 72 and that is used for the second fastener 94 to pass through, the gas is blocked by the second sealing ring 95 and cannot enter the accommodation cavity 601 between the second portion 72 of the cover body 70 and the fastening portion 22, so that air tightness between the fastening portion 22 and the second portion 72 of the cover body 70 can be effectively improved.

To further improve sealing performance between the second portion 72 of the cover body 70 and the fastening portion 22, in some implementations, a bottom wall of the second annular groove 222 is provided with an annular protrusion 91, and the annular protrusion 91 protrudes from the bottom wall of the second annular groove 222 toward the second portion 72, and the annular protrusion 91 surrounds the cover body opening 701. In this implementation, the inner wall of the second annular groove 222 is provided with the annular protrusion 91, and the annular protrusion 91 protrudes from the bottom wall of the second annular groove 222 toward the second portion 72 of the cover body 70. Therefore, a contact area between the annular protrusion 91 and the second sealing ring 95 can be increased, and a contact surface between the annular protrusion 91 and the second sealing ring 95 is a continuously curved surface, so that sealing performance between the fastening portion 22 and the first sealing ring 93 can be improved. In addition, a requirement for the air tightness between the fastening portion 22 and the second portion 72 can be met without applying excessively large pressure to the fastening portion 22 by the second portion 72. When the vehicle light module 10 uses processing chips, such as a DMD chip, whose performance is affected due to excessively large pressure, because the requirement for the air tightness between the fastening portion 22 and the second portion 72 can be met without applying excessively large pressure to the fastening portion 22 by the second portion 72, it can be ensured that the DMD chip is not subject to excessively large pressure while the air tightness between the fastening portion 22 and the second portion 72 is ensured, so that performance of the DMD chip is not affected.

In some implementations, a surface that is of the second portion 72 of the cover body 70 and that faces the fastening portion 22 is also provided with an annular protrusion 91 at a position corresponding to the second annular groove 222, and the annular protrusion 91 protrudes, toward the fastening portion 22, from the surface that is of the second portion 72 and that faces the fastening portion 22, so that air tightness between the second sealing ring 95 and the second portion 72 can also be ensured, to further reduce pressure applied by the second portion 72 to the fastening portion 22, and reduce impact on the performance of the DMD chip.

It may be understood that there may be one or more second sealing rings 95 and second annular grooves 222. A quantity of second sealing rings 95 and a quantity of second annular grooves 222 are not specifically limited in this embodiment of this application.

Larger power of the vehicle light module 10 indicates a higher heat dissipation requirement. To improve the heat dissipation efficiency of the vehicle light module 10 in this embodiment of this application, with reference to FIG. 3 to FIG. 8, in some embodiments, the vehicle light module 10 further includes a heat dissipator 41. At least a part of the heat dissipator 41 extends out of the accommodation cavity 601 from the cover body opening 701. First, in this embodiment, the heat dissipator 41 is disposed on the vehicle light module 10, so that a heat dissipation capability of the vehicle light module 10 can be improved by using the heat dissipator 41. In addition, the part of the heat dissipator 41 of the vehicle light module 10 can extend out of the accommodation cavity 601 from the cover body opening 701. Therefore, the heat dissipator 41 can conduct a large amount of heat to the outside of the accommodation cavity 601 through the part outside the cover body opening 701, and heat is effectively dissipated, so that heat dissipation performance of the vehicle light module 10 can be effectively improved. Moreover, because the part of the heat dissipator 41 of the vehicle light module 10 is located outside the accommodation cavity 601, a length of the heat dissipator 41 in the first direction X may be appropriately increased without being limited by space of the accommodation cavity 601. An increase in the length of the heat dissipator 41 in the first direction X can increase a heat exchange area of the heat dissipator 41, so that heat dissipation effect of the heat dissipator 41 on the vehicle light module 10 can be effectively improved.

In some implementations, the heat dissipator 41 is disposed on the casing 21 of the vehicle light module 10. Specifically, the heat dissipator 41 is disposed on a side that is of the casing 21 and that faces away from a light-emitting side, that is, located on a side that is of the casing 21 and that faces the backlight side, and located in the region surrounded by the second annular groove 222. Because the heat dissipator 41 is located in the region surrounded by the second annular groove 222, the heat dissipator 41 does not affect a normal layout of the second sealing ring 95 in the second annular groove 222, and does not affect sealing performance of the accommodation cavity 601.

Specifically, the heat dissipator 41 is disposed on a side that is of the end cover 212 and that is away from a container, so that the part of the heat dissipator 41 can extend out of the accommodation cavity 601 from the cover body opening 701, to improve the heat dissipation performance. It may be understood that, in some other implementations, the heat dissipator 41 may alternatively not extend out of the accommodation cavity 601.

In some implementations, the length of the heat dissipator 41 in the first direction X is 0.3 times to 2 times a length of the casing 21 in the first direction X. Within this range, the heat dissipation requirement of the vehicle light module 10 may be met by using the heat dissipator 41, so that the heat dissipation performance is improved.

In some implementations, the vehicle light module 10 further includes a fan 42. The fan 42 is connected to a side that is of the heat dissipator 41 and that is away from the casing 21. Heat exchange efficiency of the heat dissipator 41 may be improved by using the fan 42, and heat of the heat dissipator 41 is quickly dissipated, to further improve the heat dissipation efficiency of the vehicle light module 10.

In some implementations, the fan 42 extends out of the accommodation cavity 601 from the cover body opening 701 without being limited by the space of the accommodation cavity 601, so that space outside the accommodation cavity 601 can be effectively utilized, and the heat dissipation effect of the vehicle light module 10 can be greatly improved by using the fan 42 without increasing a volume of the accommodation cavity 601.

In comparison with using an air conditioning system of the vehicle 1000 for heat dissipation, which requires arrangement of a long pipe to connect to a cooling plate heat exchanger of the air conditioning system, increasing overall layout difficulty of the air conditioning system, the vehicle light module 10 in this implementation dissipates heat via the fan 42, and which operates independent of the air conditioning system, thereby reducing the overall layout difficulty, lowering production and manufacturing costs, and meeting the heat dissipation requirement.

Refer to FIG. 3 and FIG. 7. In some embodiments, the vehicle light 100 further includes a bracket 96. The bracket 96 is connected to the housing 60 and is located in the accommodation cavity 601, and the vehicle light module 10 is fastened to the bracket 96.

Specifically, the fastening portion 22 is attached to the bracket 96. The fastening portion 22 is located on a side that is of the bracket 96 and that faces the cover body 70, and the fastening portion 22 is provided with a third fastening hole 223. The vehicle light 100 further includes a third fastener 97, and the third fastener 97 passes through the third fastening hole 223 and is fastened to the bracket 96, to fasten the vehicle light module 10 to the bracket 96. Because the third fastener 97 passes through the third fastening hole 223 to fasten the fastening portion 22 to the bracket 96, and the fastening portion 22 is located on the side that is of the bracket 96 and that faces the cover body 70, a direction in which the third fastener 97 passes through the third fastening hole 223 is from the backlight side to the light-emitting side. The cover body 70 and the housing opening 602 are located on the backlight side of the vehicle light module 10. In this case, the cover body 70 is detached from the housing 60, so that the third fastener 97 can be conveniently operated through the housing opening 602, to facilitate detachment or assembly of the third fastener 97, and improve operability.

In some implementations, the third fastening hole 223 is provided directly opposite to the housing opening 602 in the first direction X. In this way, the third fastener 97 can be more conveniently detached or assembled through the housing opening 602.

Specifically, the bracket 96 is provided with a third assembly hole 961 at a position corresponding to the third fastening hole 223, and the third fastener 97 passes through the third fastening hole 223 and is detachably fastened to the third assembly hole 961.

In some implementations, the third assembly hole 961 is a threaded hole, and the third fastener 97 is a bolt or a screw.

In some other implementations, the third assembly hole 961 may alternatively be a pin hole, and the third fastener 97 is a pin. The fastening portion 22 of the vehicle light module 10 is fastened to the bracket 96 by inserting the pin into the pin hole.

It may be understood that, in some other implementations, the fastening portion 22 of the vehicle light module 10 may alternatively be fastened to the bracket 96 through snap-fit clamping or a magnetic connection or in another manner.

In some implementations, the third fastening hole 223 is located outside a region surrounded by a connection position at which the body 20 is connected to the cover body 70 in a sealed manner. Specifically, the third fastening hole 223 is located outside the region surrounded by the second annular groove 222. In this way, gas can be prevented from entering the accommodation cavity 601 through the third fastening hole 223, so that the sealing performance of the accommodation cavity 601 of the vehicle light 100 is improved.

Refer to FIG. 3 and FIG. 7. In some embodiments, the vehicle light 100 further includes a drive component 98. The drive component 98 is connected to the housing 60 and is configured to drive the bracket 96 to move relative to the housing 60. In this embodiment, the drive component 98 drives the bracket 96 to move relative to the housing 60, so that a position of the vehicle light module 10 relative to the housing 60 can be adjusted. In this way, an emergent light ray of the vehicle light module 10 can be adjusted or adjusted in real time, and therefore, an emergent light ray of the vehicle 1000 is adjusted, to achieve better lighting and display effect.

In some implementations, the drive component 98 may drive the bracket 96 to move in the first direction X. In some other implementations, the drive component 98 may alternatively drive the bracket 96 to move in a direction perpendicular to the first direction X, or may drive the bracket 96 to move in the first direction X and drive the bracket 96 to move in a direction perpendicular to the first direction X.

In some implementations, the drive component 98 includes a lead screw 981 and a drive motor (not shown in the figure) that drives the lead screw 981 to rotate. An end of the lead screw 981 is rotatably fastened to the housing 60, for example, is rotatably fastened to the housing 60 through a bearing. The other end of the lead screw 981 is threaded to the bracket 96, and the drive motor is connected to the lead screw 981, to drive the lead screw 981 to rotate. When the lead screw 981 rotates, the bracket 96 may be driven to move in an axial direction of the lead screw 981.

In some implementations, the axial direction of the lead screw 981 is consistent with the first direction X. Therefore, the drive motor and the lead screw 981 may drive the bracket 96 to move in the first direction X.

It may be understood that the drive component 98 may alternatively be another mechanical structure.

To adjust the emergent light ray of the vehicle light module 10 while ensuring the sealing performance and heat dissipation performance of the accommodation cavity 601 of the vehicle light 100, in some implementations, the second portion 72 is provided with the cover body opening 701, and the body 20 of the vehicle light module 10 is connected to the second portion 72 in a sealed manner to cover the cover body opening 701 in a sealed manner. The connection portion 73 is made of a flexible material, so that the connection portion 73 is deformable. In this implementation, because the body 20 of the vehicle light module 10 is connected to the second portion 72 in a sealed manner and covers the cover body opening 701 in a sealed manner, it can be ensured that a part of the body 20 of the vehicle light module 10 is exposed to the outside of the accommodation cavity 601 through the cover body opening 701. For example, a part of the heat dissipator 41 and/or the fan 42 are/is exposed to the outside of the accommodation cavity 601. This can effectively improve the heat dissipation performance of the vehicle light module 10. In addition, because the first portion 71 is connected to the housing 60 in a sealed manner and the second portion 72 is connected to the fastening portion 22 of the body 20 of the vehicle light module 10 in a sealed manner, it can be ensured that the cover body 70 and the body 20 of the vehicle light module 10 covers the housing opening 602 in a sealed manner. This ensures the sealing performance of the accommodation cavity 601. Besides, the drive component 98 may further drive the bracket 96 to move, and a movement of the bracket 96 drives the connection portion 73 of the flexible material to extend and move. In this way, the cover body 70 does not limit the movement of the bracket 96 and a position of the bracket 96 can be adjusted, so that adjustment of the emergent light ray of the vehicle light module 10 of the vehicle light 100 in this embodiment can be ensured. Moreover, the first portion 71 is detachably connected to the housing 60 and the second portion 72 is detachably connected to the fastening portion 22 of the body 20. This can further facilitate replacement and repair of the vehicle light module 10.

In some implementations, the connection portion 73 is made of a rubber material or another metal or non-metal flexible material. It should be noted that the flexible material for the connection portion 73 has specific ductility, so that the connection portion 73 can be prevented from breaking or disconnecting when the connection portion 73 is stretched, to ensure the sealing performance of the accommodation cavity 601.

Refer to FIG. 3 to FIG. 8. A method for detaching the vehicle light module 10 in this embodiment is as follows: First, the first fastener 92 is detached from the first fastening hole 811 and the second fastener 94 is detached from the second fastening hole 221, so that the cover body 70 can be detached from the housing 60 and the vehicle light module 10. Then, the third fastener 97 in the accommodation cavity 601 is detached from the third fastening hole 223 and the third assembly hole 961 through the housing opening 602, so that the vehicle light module 10 can be detached from the bracket 96, and then the vehicle light module 10 can be taken out of the accommodation cavity 601 through the housing opening 602, to facilitate repair or replacement of the vehicle light module 10.

During assembly of the vehicle light module 10, the vehicle light module 10 may be first mounted on the bracket 96, and the third fastener 97 passes through the third fastening hole 223 and is fastened to the third assembly hole 961, and then the first portion 71 and the second portion 72 of the cover body 70 are respectively fastened to the housing 60 and the fastening portion 22, to complete assembly.

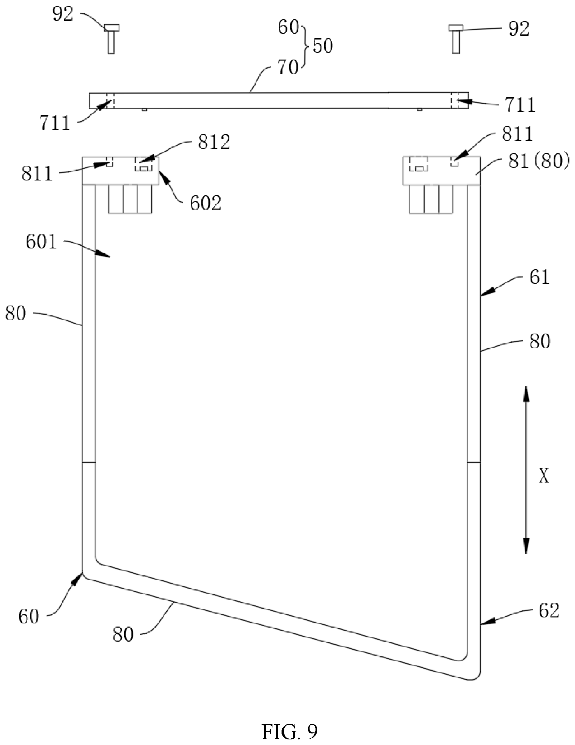

FIG. 9 is diagram of another structure of a light housing 50 of the vehicle light 100 in the embodiment in FIG. 2 according to an embodiment of this application. The vehicle light 100 in this embodiment of this application may be used in the vehicle 1000 in FIG. 1, and may also be used in a transportation means other than the vehicle 1000 in FIG. 1, for example, an airplane, a ship, a train, or a robot, to implement lighting.

Refer to FIG. 9. The vehicle light 100 includes a housing 60, a cover body 70, and a vehicle light module 10. The housing 60 encloses an accommodation cavity 601 with a housing opening 602. The cover body 70 is connected to the housing 60 in a sealed manner and covers the housing opening 602 in a sealed manner. The vehicle light module 10 includes a light-emitting side and a backlight side that are opposite to each other in a first direction X. The cover body 70 and the housing opening 602 are located on the backlight side of the vehicle light module 10, and the cover body 70 is detachably connected to the housing 60. For the housing 60, the housing opening 602, the accommodation cavity 601, the vehicle light module 10, the first direction X, the light-emitting side, the backlight side, and the like, refer to the foregoing embodiments in FIG. 2 to FIG. 8. Details are not described herein again. A difference between the vehicle light 100 in this embodiment and that in the foregoing embodiment lies in a structure of the cover body 70.

In this embodiment, the cover body 70 is not provided with a cover body opening 701 (same as that in the foregoing descriptions). The cover body 70 is directly connected to the housing 60 and is not connected to the vehicle light module 10, and the cover body 70 may completely cover the housing opening 602 in a sealed manner. The vehicle light 100 in this embodiment is mainly applicable to a vehicle light 100 that has a small heat dissipation requirement or that uses a cooling plate heat exchanger for heat dissipation.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A vehicle light, wherein the vehicle light comprises:
a housing, wherein the housing encloses an accommodation cavity with a housing opening;
a cover body, wherein the cover body is detachably connected to the housing and covers the housing opening in a sealed manner; and
a vehicle light module, wherein a lens of the vehicle light module is accommodated in the accommodation cavity, the vehicle light module comprises a light-emitting side and a backlight side that are opposite to each other in a first direction, the housing opening is located on the backlight side of the vehicle light module, and an orthographic projection of the vehicle light module on a plane on which the housing opening is located falls within a range of the housing opening in the first direction.

2. The vehicle light according to claim 1, wherein the housing comprises a plurality of enclosing walls, the enclosing wall that is directly opposite to the vehicle light module and that is located on the backlight side of the vehicle light module in the first direction is disposed as a first enclosing wall, the first enclosing wall is provided with the housing opening, a first fastening hole is provided on a side that is of the first enclosing wall and that is away from the accommodation cavity, the vehicle light further comprises a first fastener, and the first fastener passes through the cover body and is detachably fastened to the first fastening hole, to fasten the cover body to the first enclosing wall.

3. The vehicle light according to claim 2, wherein a first annular groove is provided on the side that is of the first enclosing wall and that is away from the accommodation cavity, the housing opening is located in a region surrounded by the first annular groove, the first fastening hole is located outside the region surrounded by the first annular groove, the vehicle light further comprises a first sealing ring, the first sealing ring is disposed in the first annular groove, and the first sealing ring is clamped between an inner wall of the first annular groove and the cover body.

4. The vehicle light according to claim 3, wherein a bottom wall of the first annular groove is provided with an annular protrusion, the annular protrusion protrudes from the bottom wall of the first annular groove toward the cover body, and the annular protrusion surrounds the housing opening.

5. The vehicle light according to any one of claims 1 to 4, wherein the cover body is provided with a cover body opening, the vehicle light module comprises a body, and the body is connected to the cover body in a sealed manner, to cover the cover body opening in a sealed manner.

6. The vehicle light according to claim 5, wherein the body is provided with a second annular groove and a second fastening hole, the cover body opening is located in a region surrounded by the second annular groove, the second fastening hole is located in the region surrounded by the second annular groove and is located outside the cover body opening, the vehicle light further comprises a second sealing ring and a second fastener, the second sealing ring is disposed in the second annular groove, the second fastener passes through the cover body and is detachably fastened to the second fastening hole, to fasten the cover body to the body, and the second sealing ring is clamped between the cover body and an inner wall of the second annular groove.

7. The vehicle light according to claim 5 or 6, wherein the vehicle light module further comprises a heat dissipator, and at least a part of the heat dissipator extends out of the accommodation cavity from the cover body opening.

8. The vehicle light according to any one of claims 1 to 7, wherein the vehicle light further comprises a bracket, the bracket is connected to the housing and is located in the accommodation cavity, the vehicle light module comprises a fastening portion attached to the bracket, the fastening portion is located on a side that is of the bracket and that faces the cover body, the fastening portion is provided with a third fastening hole, the vehicle light further comprises a third fastener, and the third fastener passes through the third fastening hole and is fastened to the bracket, to fasten the vehicle light module to the bracket.

9. The vehicle light according to claim 8, wherein the cover body is provided with the cover body opening, the vehicle light module comprises the body, the body comprises the fastening portion, the body is connected to the cover body in a sealed manner, to cover the cover body opening in a sealed manner, and the third fastening hole is located outside a region surrounded by a connection position at which the body is connected to the cover body in a sealed manner.

10. The vehicle light according to claim 8 or 9, wherein the third fastening hole is provided directly opposite to the housing opening in the first direction.

11. The vehicle light according to any one of claims 1 to 10, wherein the vehicle light further comprises a drive component, the drive component is connected to the housing and is configured to drive the bracket to move relative to the housing, the cover body comprises a first portion detachably connected to the housing, a second portion detachably connected to the body, and a connection portion connected between the first portion and the second portion, the second portion is provided with the cover body opening, the body of the vehicle light module is connected to the second portion in a sealed manner, to cover the cover body opening in a sealed manner, and the connection portion is made of a flexible material, so that the connection portion is deformable.

12. A vehicle light module, used in a vehicle light, wherein the vehicle light comprises a housing and a cover body, the housing encloses an accommodation cavity with a housing opening, the cover body is detachably connected to the housing and covers the housing opening in a sealed manner, a lens of the vehicle light module is accommodated in the accommodation cavity, the vehicle light module comprises a light-emitting side and a backlight side that are opposite to each other in a first direction, the housing opening is located on the backlight side of the vehicle light module, and an orthographic projection of the vehicle light module on a plane on which the housing opening is located falls within a range of the housing opening in the first direction; and
the vehicle light module comprises a casing, an optical component located in the casing, and a fastening portion located outside the casing, the fastening portion is provided with a fastening through hole, to detachably connect to a bracket of the vehicle light, the fastening portion is attached to a side that is of the bracket and that faces away from the light-emitting side, and the fastening through hole is directly opposite to the housing opening on the backlight side of the vehicle light in the one direction.

13. The vehicle light module according to claim 12, wherein an annular groove and a fastening hole are provided on a side that is of the fastening portion and that faces away from the light-emitting side, the annular groove is configured to place a sealing ring, the sealing ring is clamped between the cover body and an inner wall of the annular groove, the fastening hole is configured to detachably connect to the cover body, the fastening hole is located in a region surrounded by the annular groove, and the fastening through hole is formed by penetrating the fastening portion in the first direction, and is located outside the region surrounded by the annular groove.

14. The vehicle light module according to claim 13, wherein a bottom wall of the annular groove is provided with an annular protrusion, and the annular protrusion protrudes from the bottom wall of the annular groove in a direction away from the light-emitting side.

15. The vehicle light module according to claim 13 or 14, wherein the vehicle light module further comprises a heat dissipator, and the heat dissipator is disposed on a side that is of the casing and that faces away from the light-emitting side, and is located in the region surrounded by the annular groove.

16. The vehicle light module according to claim 15, wherein the vehicle light module further comprises a fan, and the fan is connected to a side that is of the heat dissipator and that faces away from the casing.

17. The vehicle light, comprising a light housing and the vehicle light module according to any one of claims 12 to 16, wherein the vehicle light module is assembled in the light housing.

18. A vehicle, comprising a vehicle main body and the vehicle light according to any one of claims 1 to 11 or claim 17, wherein the vehicle light is connected to the vehicle main body.
